# EUROPÄISCHE PATENTSCHRIFT

(11) **EP 2 515 019 B1**
(45) Veröffentlichungstag und Bekanntmachung des Hinweises auf die Patenterteilung: **05.10.2016**
(21) Anmeldenummer: 12002758.6
(22) Anmeldetag: 20.04.2012
(51) Int. Cl.: F16L 59/14, F16L 27/08

(54) **Verwendung einer Rohrkupplung in Form eines Drehgelenks eines Verladearms zum Transport von kalten Medien, und Verfahren zum Transport von kalten Medium.**
Use of a pipe coupling in the form of a swivel joint of a loading arm, and method of transporting cold fluids.
Utilisation d'un accouplement tubulaire sous forme d'articulation tournante d'un bras de chargement, et méthode de transport de fluides froids.

(30) Priorität: 20.04.2011 DE 102011018213
(43) Veröffentlichungstag der Anmeldung: 24.10.2012
(73) Patentinhaber: SVT Gmbh, 58332 Schwelm (DE)
(72) Erfinder: Mertens, Klaus, 58640 Iserlohn (DE)
(74) Vertreter: dompatent von Kreisler Selting Werner - Partnerschaft von Patent- und Rechtsanwälten mbB

(56) Entgegenhaltungen:
- EP-A1- 0 947 464
- US-A- 3 514 127
- US-A1- 2007 151 721

## Beschreibung

Die Erfindung betrifft die Verwendung einer Rohrkupplung in Form eines Drehgelenks eines Verladearms zum Transport von kalten Medien, Insbesondere verflüssigten Gasen, umfassend ein erstes Rohrbefestigungsbauteil, das drehbar in Bezug auf ein zweites Rohrbefestigungsbauteil befestigt ist. Darüber hinaus umfasst die Erfindung ein Verfahren zum Transport von kalten Medien, insbesondere von verflüssigten Gasen, durch eine Rohrdrehkupplung,

Verladearme werden überall dort eingesetzt, wo Fluide und/oder gasförmige Medien verladen werden. Hierbei besteht beispielsweise die Möglichkeit, den Verladearm zur Übergabe des Strömungsmediums in einen Sammelbehälter oder aus einem Sammelbehälter in eine Rohrleitung einzusetzen. Ein bevorzugtes Einsatzgebiet ist das Umladen einer Ladung In die oder aus den Tanks eines Schiffes, wobei das Schiff an einem Dock befestigt und ein oder mehrere Verladearme am Rand des Docks aufgestellt sind. Der Verladearm wird dabei auch als Schiffsladearm oder Schiffsverlader bezeichnet. Bevorzugt ist der Verladearm ein Gebilde aus gelenkig miteinander verbundenen Rohren. Ein Flansch einer solchen Rohrkonstruktion wird üblicherweise an einem korrespondierenden Flansch an der Ladeleitung eines Tankschiffes befestigt, das längsseits eines Docks befestigt und verankert ist. Der Verladearm steht dabei beispielsweise mit einem Speichertank in Verbindung um die flüssigen oder gasförmigen Medien vom oder zum Tankschiff durch den Laderaum umzuladen. Aufgrund der Schiffsbewegungen durch Gezeiten, des Gewichtes der umzuladenden Flüssigkeit, Hochwasser oder stürmisches Wetter muss dabei der Verladearm den Bewegungen des Schiffes folgen. Hierzu weist der Verladearm Rohrkupplungen In Form von Drehgelenken auf, so dass das am freien Ende des Verladearms befestigte geflanschte Rohrstück zu jedem Zeitpunkt zur Ladeleitung des Schiffes fluchtet. Die US 3,514,127 beschreibt ein Drehgelenk zum gas- beziehungsweise fluiddichten Verbinden zwischen einer stationären und einer rotierenden Komponente. Ein Dichtungselement steht Im Kontakt mit einem Ende der stationären Komponente mittels einem Metallbalg, welcher an der anderen Komponente befestigt ist. Die zwei Komponenten sind für eine relative Drehung zueinander mittels Lager gestützt, welche um die Metallbälge derart beabstandet angeordnet sind, um Ventilatorenblätter anzuordnen, welche ein Zirkulieren von Kühlluft bewirken. Das Dichtungselement weist Öffnungen auf, um einen kontrollierten Ausfluss von Fluid durch das Drehgelenk zu ermöglichen, wenn ein vorbestimmter Wert von einem Dichtungsverschleiß aufgetreten Ist. Der Flüssigkeitsausfluss ist dazu benutzt, um als Warnvorrichtung zu agieren.

Die US 2007/0151721 A1 beschreibt eine Drehgelenkvorrichtung in spiralförmiger Röhrenform, welche eine Achse zum Verbinden einer Pumpe und eine drehbare Nabe aufweist, wobei die Nabe an der Achse befestigt ist und zum Befestigen eines Endes eines spiralförmigen Rohres vorgesehen ist. Die Achse und die Narbe bilden zusammen einen Kanal zum Passieren von gepumptem Material aus. Eine Kranlagerung ist mit dem Flüsslgkeltskanal verbunden.

Die EP 0 947 464 A1 offenbart eine Beladevorrichtung für Liquid Natural Gas (LNG), welche einen Verladearm zum Verladen von kyrogenen Fluiden von einer ersten Speichervorrichtung zu einem Schiff aufweist. Der Verladearm hat einen ersten Arm und einen zweiten Arm, welche beide jeweils an einem ersten Ende mittels eines Drehgelenkes verbunden sind, wobei der erste und der zweite Arm mit jeweils einem zweiten Ende mit der Speichervorrichtung und dem Schiff entsprechend verbunden ist. Die Beladevorrichtung weist weiterhin einen Liquid Natural Gas-Kanal auf, welcher mittels des ersten und des zweiten Armes gestützt ist und welcher als gasundurchlässiges Gehäuse ausgeführt ist.

Eine besondere Schwierigkeit beim Verladen ergibt sich dann, wenn kalte Medien und insbesondere verflüssigten Gase mittels eines Verladearms transportiert werden sollen. Verflüssigte Gase, wie beispielsweise ein Liquid Natural Gas (LNG), werden bei Temperaturen von -163 °C verladen, was wiederum besondere Anforderungen an die drehbaren Rohrkupplungen beziehungsweise Rohrdrehgelenke stellt. Um ein Vereisen der Rohrdrehgelenke bei derartig tiefen Temperaturen zu vermeiden, sind verschiedene Verfahren bekannt geworden.

So Ist es beispielsweise bekannt, eine Rohrkupplung In Form eines Drehgelenks eines Verladearms während des Verladens von tiefkalten Medien mit Stickstoffgas zu spülen, um eine Elsbildung im Lager zu vermeiden. Alleine durch die In der Luft enthaltene Feuchtigkeit könnte sich Eis bilden, wodurch ein uneingeschränktes Verdrehen der Rohrkupplung behindert werden könnte. Eine Stickstoffspülung muss permanent während der Verladung durchgeführt werden, woraus sich ein entsprechender Stickstoffverbrauch ergibt. Die Stickstoffspülung sorgt dabei dafür, dass die Feuchtigkeit abtransportiert wird beziehungsweise sich nicht bilden kann, wobei die Gefahr besteht, dass sich im Falle eines Ausfalls der Stickstoffspülung das Gelenk nicht mehr gedreht werden könnte. Dies stellt ein enormes Sicherheitsrisiko dar, weil zum Beispiel die Bewegungen der Verladeeinrichtungen blockiert wären. Zum anderen sind erhebliche Anstrengungen für die Aufrechterhaltung einer ausreichenden N₂-Versorgung notwendig.

Nicht nur der hohe Stickstoffverbrauch, sondern auch das vorhandene Sicherheitsrisiko stellen Nachteile der bekannten Möglichkeit zur Erhaltung einer Drehbewegung einer Rohrkupplung dar.

Aufgabe der Erfindung ist es, die Nachteile aus dem Stand der Technik zu überwinden und ein Verfahren bereitzustellen, mit dem ein sicheres Verdrehen der Rohrdrehkupplung zu jedem Zeitpunkt gewährleistet wird und darüber hinaus eine kostensparende Lösung im Detail bereitzustellen.

Diese Aufgabe wird durch eine Verwendung einer Rohrdrehkupplung gemäß dem Patentanspruch 1, einem Verfahren gemäß dem Patentanspruch 15 und einer Rohrdrehkupplung gemäß dem Patentanspruch 18 gelöst. Weitere vorteilhafte Ausgestaltungen sind den jeweiligen Unteransprüchen zu entnehmen. Die einzelnen Merkmale in den Ansprüchen sind jedoch nicht auf diese beschränkt, sondern können mit anderen Merkmalen aus der nachfolgenden Beschreibung wie auch aus den Unteransprüchen zu weiteren Ausgestaltungen verknüpft werden.

Eine Rohrkupplung, die die genannte Aufgabe löst, Ist eine Rohrdrehkupplung in Form eines Drehgelenks, insbesondere eines Verladearms, zum Transport von kalten Medien, insbesondere verflüssigten Gasen, umfassend ein erstes Rohrbefestigungsbauteil, das drehbar in Bezug auf ein zweites Rohrbefestigungsbauteil befestigt ist, wobei die Rohrbefestigungsbauteile abgedichtet zueinander angeordnet sind und die Rohrbefestigungsbauteile einen innenliegenden Rohrkanalabschnitt zum Durchfließen des kalten Mediums und eine zum innenliegenden Rohrkanalabschnitt beabstandete außenliegende Lageraufnahme zur Lagerung der Rohrdrehkupplung bilden, wobei ein Mittel zur Beabstandung der Lageraufnahme vor dem Rohrkanalabschnitt derart ausgebildet Ist, dass ein Wärmestrom zwischen dem Rohrkanalabschnitt und der Lagerung reduziert ist, bevorzugt derart verringert Ist, dass sich in einem Betrieb der Rohrdrehkupplung mit einem durchfließenden kalten Medium in der Lagerung eine derartige Temperatur einstellt, dass eine Fettschmierung der Lagerung ermöglicht Ist. Durch die voneinander beabstandete Anordnung von Elementen der Rohrbefestigungsbauteile, insbesondere in der Form als Mediumführung mit einem innenliegenden Rohrabschnittskanal und der Lagerung der Rohrbefestigungsbauteile als eine außen liegende Lageraufnahme wird eine robuste Lösung der Aufgabe realisiert. Eine Beabstandung innerhalb des Drehgelenks bietet den Vorteil einer thermischen Trennung zwischen den Strömungsmedien und der Lagerung der Rohrkupplung, so dass auch Medien mit tiefsten Temperaturen förderbar sind, ohne eine Bewegungsfreiheit der Rohrkupplung in Form eines Drehgelenks einzuschränken. Es ist somit zu jedem Zeitpunkt ein sicheres Verdrehen der Rohrkupplung gewährleistet.

Als kalte Medien werden hierbei Medien mit Temperaturen von -60°C und weniger, insbesondere -90 °C und weniger, vor allem aber cryogene Medien wie zum Beispiel verflüssigte Gase verstanden. Ein bevorzugt transportiertes Medium ist Erdgas (Liquid Natural Gas, LNG), das für einen Transport verflüssigt wird, da es beim Verflüssigen um ein sechshundertfaches seines ursprünglichen Volumens verkleinert werden kann. Um das Erdgas in verflüssigtem Zustand zu halten, muss es bei einer Temperatur von -163 °C transportiert werden. Bei kalten Medien handelt es sich somit um Medien, die bei sehr tiefen Temperaturen transportiert werden, so dass beispielsweise eine herkömmliche Fettschmlerung eines Lagers nicht mehr möglich Ist. Daher wird für derartige Arbeitsbedingungen oftmals auf eine Stickstoffschmierung zurückgegriffen, bei der insbesondere eine Durchflussströmung In der Lagerung notwendig ist. Darauf kann hier verzichtet werden, Durch die Erfindung wird eine Rohrdrehkupplung bereit gestellt, in der eine Lagerung derart angeordnet ist, dass eine Fettschmierung der Lager auch während eines Transports von derart kalten Medien, insbesondere verflüssigtem Erdgas, mit Fett schmierbar ist, Ebenso löst eine

Verwendung einer solchen Rohrkupplung die genannte Aufgabe.- 3a -

In einer Ausgestaltungsvariante der Erfindung umfasst das Mittel zur Beabstandung zumindest einen Steg zwischen dem Rohrkanalabschnitt und der Lageraufnahme, wobei gemäß einer Ausgestaltung In dem Steg bevorzugt mindestens eine sich radial und umfänglich erstreckende Öffnung vorhanden ist. Weiterhin ist auch eine Verwendung einer Rohrkupplung entsprechend dieser Ausgestaltung vorgesehen. Durch die Ausbildung eines Stegs ist der Wärmestrom zwischen der Lagerung und dem inneren Rohrkanalabschnitt definiert leitbar. Mit einer Ausbildung von Öffnungen im Steg kann der für einen Wärmestrom zur Verfügung stehende Querschnitt insbesondere im Vergleich zu einem Vollmaterial reduziert werden. So dient einerseits die reduzierte Querschnittsfläche zur Verringerung des Wärmeaustauschs. Andererseits kann mittels der Beabstandung der Lagerung vom Medium führenden Rohrkanalabschnitt eine thermische Entkopplung angestrebt werden. Ist der bevorzugt aus einem Metall gefertigte Steg ein guter Wärmeleiter, so kann mittels einer oder mehrerer Öffnungen eine thermische Entkopplung angestrebt werden, wenn die Öffnung beispielsweise frei bleibt, zum Beispiel mit Luft gefüllt ist. Im Betrieb kann es zu Vereisungen kommen. Diese könnten auch die Öffnungen zusetzen bzw. füllen. Beispielsweise können daher ein oder mehrere Öffnungen abgedeckt sein, zum Beispiel mittels Kunststoffpfropfen. Auch können die Pfropfen mit einem thermisch schlecht leitendem Material, insbesondere einem thermisch isolierenden Material gefüllt sein.

Unter dem Begriff Öffnung ist hierbei jedwede Vertiefung, Ausnehmung, ein Durchbruch oder eine Bohrung zu verstehen, die eine thermische Entkopplung zwischen einem inneren und einem äußeren Ring der Rohrdrehkupplung beeinflusst, zwischen denen die eine oder mehrere Öffnungen angeordnet sind. Dabei muss eine Öffnung nicht durchgehend in Form eines Lochs vorilegen, sondern kann auch lediglich als Vertiefung über einen gewissen Bereich des Stegs in den Steg eingeformt sein. Auch kann es sich um mehrere Öffnungen handeln, die sich in unterschiedlichen radialen und/oder umfänglichen Abständen zueinander im Steg erstrecken. Dabei dient der Steg zur Sicherung der statischen und/oder dynamischen Stabilität der Rohrdrehkupplung. Bevorzugt sind die Öffnung oder die Öffnungen zur Erhöhung einer Steilheit eines Temperaturgradienten vorgesehen. Insbesondere dienen die Öffnungen zur Reduzierung des Wärmestroms in Richtung des Rohrkanalabschnitts.

Eine weitere Ausgestaltungsform ergibt sich beispielsweise, wenn mehrere, symmetrisch am Umfang verteilte Öffnungen In der Rohrkupplung vorhanden sind. Weiterhin Ist auch eine Verwendung einer Rohrkupplung entsprechend dieser Ausgestaltung vorgesehen. Eine symmetrische Verteilung mehrerer Öffnungen am Umfang der Rohrkupplung und vorzugsweise In einem den Inneren Ring und den äußeren Ring verbindenden Steg ermöglicht es beispielsweise die Wärmeleitung durch den Steg gleichmäßig zu reduzieren. Außerdem besteht die Möglichkeit eine vergleichsmäßig über dem Umfang statische und dynamische Stabilität zwischen dem äußerem Ring und dem innerem Ring herzustellen. Dabei kann es ebenfalls eine Ausführungsform der Erfindung sein, dass die Öffnungen zwar symmetrisch, der Verbindungssteg zum Beispiel als Fachwerk oder sich konisch erstreckender Steg ausgebildet ist. In einer bevorzugten Ausführungsform sind die Öffnungen im Wesentlichen quadratisch.

Als äußerer und innerer Ring wird beispielsweise verstanden, dass der äußere Ring derjenige Bereich ist, in dem die Lagerung angeordnet Ist. Hingegen Ist der innere Bereich derjenige, der kanalartig zum Durchströmen des kalten Mediums vorgesehen ist. Durch die Beabstandung und insbesondere thermisch isolierend wirkende Trennung dazwischen wird ermöglicht, dass der äußere Ring sich nicht soweit abkühlt, als dass die Lagerung mit Schmierfett dadurch unmöglich wird. Bevorzugt kühlt der Bereich, in dem die Lagerung, bevorzugt eine Wälzlagerung, angeordnet ist, im Betrieb mit einer cryogenen Flüssigkeit, bevorzugt LNG, nicht tiefer als -30 °C, bevorzugt nicht tiefer als -20 °C ab. Daher kann zwischen dem Inneren und dem äußeren Ring jegliche Materialverbindung in erster Verbindung als Steg angesehen werden, insbesondere unter der Prämisse, dass sie eine Wärmeübertragung verringert. Dieses kann durch die Nutzung von verschiedenen Materialien erfolgen, durch Einsatz von thermischen Isolatoren und/oder durch konstruktive Gestaltung.

In einer weiteren Ausführungsform umfasst die Lagerung eine äußere Lageraufnahme und eine innere Lageraufnahme, wobei die Lageraufnahmen jeweils mit den Rohrbefestigungsbauteilen verbunden sind. Weiterhin ist auch eine Verwendung einer Rohrkupplung entsprechend dieser Ausgestaltung vorgesehen. Die äußere Lagerung der Rohrkupplung umfasst hierbei ein Lager, wodurch ein Verdrehen der mit der Rohrkupplung verbundenen Rohre oder Flansche ermöglicht wird. Wird nun die äußere Lagerung derart ausgebildet, dass eine radial innere und eine radial äußere Lageraufnahme ausgebildet sind, so Ist mittels der Lageraufnahmen beispielsweise eine als Radiallager beschreibbare Lagerung herstellbar. Die Lageraufnahmen können dabei unmittelbar die Lagerschalen von zum Beispiel Kugeln oder Zylinderrollen bilden. Die äußere Lageraufnahme bildet hierbei die radial äußere Lagerschale und die radial innere Lageraufnahme die entgegen gesetzte innere Lagerschale zur Bildung der Lagerung. Bevorzugt greifen die Lageraufnahmen formschlüssig ineinander, so dass einerseits eine stützende Wirkung durch den Formfluss erzielbar ist und andererseits eine Dichtheit gewährleistbar Ist, die gleichzeitig ein Schmieren des gebildeten Radiallagers ermöglicht.

Die Lageraufnahmen zur Bildung der Lagerung bilden bevorzugt einen Kreisring, der einen größeren Innendurchmesser aufweist als der Innendurchmesser der Rohrbefestigungsbauteile. In einer bevorzugten Ausführungsform sind an die Rohrbefestigungsbauteile radiale Erstreckungen angeformt, die gleichzeitig die Verbindungsstege zu der Inneren und äußeren Lageraufnahme bildet. Die Lageraufnahmen können kraft- und/oder formschlüssig mit den Verbindungsstegen der Rohrbefestigungsbauteile verbunden sein. In vorteilhafter Weise werden die Rohrbefestigungsbauteile mit den Lageraufnahmen mittels Schraubverbindungen verbunden.

In einer Ausgestaltungsvariante der Erfindung umfasst die Lagerung in den Lageraufnahmen geführte Kugeln, wobei in den Lageraufnahmen zumindest eine Kugellaufbahn ausgebildet ist. Weiterhin ist auch eine Verwendung einer Rohrkupplung entsprechend dieser Ausgestaltung vorgesehen. Durch die Beabstandung des Inneren Rohrkanalabschnitts zu der äußeren Lagerung Ist die Möglichkeit geschaffen, die Kugellaufbahn auf einem größeren Durchmesser anzuordnen, wodurch beispielsweise auf eine zweibahnige Ausführung einer Kugellaufbahn verzichtet werden kann. Das einreihige Kugellager ermöglicht aufgrund des größeren Durchmessers eine ausreichende Moment- und Kraftübertragung, um die Rohrkupplung in Form eines Drehgelenks in einem Verladearm einsetzen zu können. Weiterhin ist auch eine Verwendung einer Rohrkupplung entsprechend dieser Ausgestaltung vorgesehen. Vorteilhaft Ist es hierbei ebenfalls, wenn die Lageraufnahmen unmittelbar die Lagerschalen beziehungsweise die Kugellaufbahnen bilden. Es ist somit eine kostengünstige und platzsparende Möglichkeit zur Herstellung einer Rohrkupplung geschaffen.

Jede Lageraufnahme oder zumindest die Kugellaufbahn kann aus einem hochfesten Werkstoff, insbesondere einem Kohlenstoffstahl gebildet werden. Für die Lagerung können harte Lagerwerkstoffe eingesetzt werden, da diese nicht mehr mit der niedrigen Temperatur beaufschlagt werden. Hierdurch ist eine höhere Belastung der Lagerung möglich. Ein modularer Aufbau der Rohrdrehkupplung ermöglicht es, die Rohrkupplung an die unterschiedlichen Anforderungen der zu fördernden Medien anzupassen und eine entsprechende Werkstoffauswahl zu treffen. Der modulare Aufbau mit unterschiedlich zusammengesetzten Elementen bietet darüber hinaus den Vorteil, dass mit vielen identischen Bauteilen gearbeitet werden kann, was wiederum die Wartungs- und Reparatureigenschaften verbessert. Bevorzugt ist die Lagerung als einreihiges Radialkugellager ausgebildet.

In einer Ausführungsform Ist an dem ersten und zweiten Rohrbefestigungsbauteil jeweils ein separates Ringelement befestigt, wobei die Ringelemente aneinander anliegen. Weiterhin ist auch eine Verwendung einer Rohrkupplung entsprechend dieser Ausgestaltung vorgesehen. Wird eine weitere Modularlsierung der Rohrkupplung dahingehend vorgenommen, dass separate Ringelemente zwischen den Rohrbefestigungsbautellen angeordnet sind, so ist eine weitere Möglichkeit geschaffen, einen konstruktiv einfachen und somit kostengünstigen Aufbau der Rohrkupplung zu ermöglichen.

Durch den Einsatz zusammenwirkender Ringelemente Ist die Möglichkeit geschaffen, Gleitflächen und insbesondere dichtende Gleitflächen als separate Bauteile in der Rohrkupplung anzuordnen. Dadurch ist ein verschleißbedingter Austausch von Bauteile leicht möglich, das heißt, dass die Wartungsfreundlichkeit erhöht wird, und gleichzeitig eine optimale Gleitpaarung in Bezug auf den eingesetzten Werkstoff auswählbar ist. Insbesondere in dem Fall, in dem die Rohrkupplung eine Vielzahl von Dreh- und/oder Schwenkbewegungen ausführen muss, und somit eine hohe Anforderung an die Reibeigenschaften der gegeneinander anliegenden Ringelemente gestellt wird und ein entsprechend hochwertiger beziehungsweise kostenintensiver Werkstoff eingesetzt wird, kann der modulare Aufbau vorteilhaft sein.

Darüber hinaus werden auch unterschiedliche Anforderungen an die einzelnen Module oder Bestandteile der Rohrkupplung gestellt. Durch den modularen Aufbau können die unterschiedlichen Bestandteile oder Bauteile der Rohrkupplung Individuell an die unterschiedlichen, das heißt spezifischen Anforderungen ausgewählt werden. So kann die Lageraufnahme bevorzugt aus einem harten Lagerwerkstoff gebildet werden, da die Lagerung vornehmlich zur Erzielung einer Drehbewegung der Rohrkupplung eingesetzt wird. Dahingegen müssen mit den Rohrbefestigungsbauteilen einerseits Dreh- und Kippmomente übertragen werden und andererseits muss der für das Rohrbefestigungsbauteil ausgewählte Werkstoff zum Beispiel schweißgeeignet sein. An die Ringelemente wird die Anforderung gestellt, dass einerseits eine Beständigkeit gegen das zu fördernde Fluid vorhanden ist und andererseits muss der Werkstoff sich durch eine entsprechende Reibeignung auszeichnen. Der modulare Aufbau bietet somit die Möglichkeit die für die Rohrkupplung eingesetzten Bauteile Individuell angepasst zu gestalten. Gemäß einer Ausgestaltung können beispielsweise für den inneren Ring ein oder mehrere Materialien der folgenden nicht abschließenden Aufzählung genutzt werden:
- austenitischer rostfreier Stahl, Aluminium, Kupfer, Monel, Messing, SilikonKupfer und ASTM A-353 Stahl.

Für den äußeren Ring kann beispielsweise normaler nichtrostender Stahl Verwendung finden.

Eine weitere Ausgestaltungsform der Erfindung wird dadurch erzielt, dass zwischen den Ringelementen und/oder den Rohrbefestigungsbauteilen und den Ringelementen zumindest eine umlaufende Dichtung angeordnet ist. Weiterhin ist auch eine Verwendung einer Rohrkupplung entsprechend dieser Ausgestaltung vorgesehen. Zur Erhöhung der Dichtheit zwischen den aneinander anliegenden Ringelementen und Rohrbefestigungsbauteilen können umlaufende Dichtungen In das Ringelement eingebracht werden. In vorteilhafter Weise können die Dichtungen in umlaufenden Ringnuten der Ringelemente eingefügt sein. Vorteilhaft kann es dabei sein, wenn die Rohrbefestigungsbauteile und die Ringelemente eine geschlossene Innere Rohroberfläche der Rohrkupplung bilden. In diesem Falle wird das Dichtungssystem nicht direkt mit dem kalten Medium beaufschlagt. Da zum Beispiel Im Falle einer Förderung eines verflüssigten Gases Temperaturen von mehr als -160 °C auftreten können, sind die umlaufenden Dichtungen vom zu fördernden kalten Medium getrennt. Welterhin kann es vorteilhaft sein, dass zwischen den Ringelementen zwei oder mehr radial versetze umlaufende Dichtungen angeordnet sind. Weiterhin ist auch eine Verwendung einer Rohrkupplung entsprechend dieser Ausgestaltung vorgesehen. Durch die Erhöhung der Anzahl der umlaufenden Dichtungen kann einerseits eine hohe Dichtigkeit erzielt werden und gleichzeitig wird die Gefahr einer Leckage reduziert. Sind die Ringelement jeweils fest mit dem Rohrbefestigungsbauteil verbunden, so bilden die gegeneinander anliegenden Ringelementflächen Kontaktflächen, die gleichzeitig die Dichtflächen der Rohrkupplung bilden. Vorzugsweise ist jedes Ringelement mit einem Rohrbefestigungsbauteil verbunden, vorzugsweise verschraubt.

In einer bevorzugten Ausführungsform sind die Ringelemente in Ringelementaufnahmen befestigt. Weiterhin ist auch eine Verwendung einer Rohrkupplung entsprechend dieser Ausgestaltung vorgesehen. Die Ringelementaufnahmen dienen einerseits dazu, die Ringelemente In einer fluchtenden Position zu den Rohrbefestigungsbauteilen zu halten und andererseits dazu eine leitende und/oder konvektive Kälteübertragung in Richtung der Lagerung zu minimieren. Bevorzugt sind die Ringelemente und Ringelementaufnahmen aus unterschiedlichen Werkstoffen mit unterschiedlichen spezifischen Werkstoffeigenschaften, insbesondere unterschiedlichen Wärmeleitfähigkeitskoeffizienten, gebildet. Weiterhin ist auch eine Verwendung einer Rohrkupplung entsprechend dieser Ausgestaltung vorgesehen. Der weitere modulare Aufbau ermöglicht es hierbei wiederum die Bauteile der Rohrkupplung entsprechend den Anforderungen auszubilden. Weisen die Ringelemente eine entsprechende Gleiteigenschaft auf, so dienen die Ringelementaufnahmen einerseits zur Sicherung der Lagerung der Ringelemente und können andererseits einen Kältefluss zur Lagerung hin minimieren.

Eine weitere Ausgestaltung sieht belspielweise vor, dass als Werkstoff ein Verbundwerkstoff genutzt wird. Beispielweise kann ein Kunststoff/Holz-Gemenge zum Einsatz kommt. Ein derartiges Holz-Kunststoff-Composite-Material, oftmals auch WPC abgekürzt, ist Insbesondere im Bereich der Ringelemente, der Ringelementaufnahmen, der Innere Ring, der äußere Ring, des ersten und/oder des zweiten Rohrbefestigungsbauteils einsetzbar. So kann beispielweise eines der genannten Bauteile vollständig oder zumindest zum Teil, insbesondere beispielsweise In Form eines Moduls aus einem derartigen Werkstoff hergestellt worden sein. Bevorzugt wird dieser Werkstoff dort eingesetzt, wo im wesentlichen nur eine Druckbelastung herrscht. Darüber hinaus kann der Werkstoff auch beschichtet werden, beispielweise um eine Eigenschaft Im Bereich der Beschichtung zu verbessern oder sogar erst herzustellen. So kann beispielweise eine Gleiteigenschaft verbessert werden, zum Beispiel mittels einer Teflonbeschichtung. Auch kann durch eine Beschichtung eine Dichteigenschaft verbessert werden. Auch dieses Ist beispielsweise mittels einer Teflonbeschichtung einstellbar. Vorteilhaft bei Verwendung dieses Werkstoffes ist dessen hohe Steifigkeit und ein geringer thermischer Ausdehnungskoeffizient insbesondere Im Vergleich zu einem metallenen Werkstoff.

Auch wenn für das WPC-Material davon ausgegangen wird, dass Holzfasern zum Einsatz gelangen, können auch andere Fasern genutzt werden, Insbesondere andere Naturfasern wie belspielweise Bambus, Jute oder ähnliches. Als Kunststoff kann zum Beispiel ein Homo- oder Copolymer genutzt werden. Neben Thermoplasten können zum Beispiel auch Duroplasten genutzt werden. Auch können Polymermischungen zum Einsatz gelangen. So können beispielweise Polyolefine wie beispielweise Polypropylen und/oder Polyethylen zum Einsatz kommen. Das Kunststoffmaterial enthält des Weiteren bevorzugt ein oder mehrere Additive, Füllstoffe und ähnliches, um damit die geforderten Eigenschaften an das Material zu unterstützen. Das können beispielweise Eigenschaften wie Flammfestigkeit, UV-Beständigkeit, Wasserabweisung und/oder elektrische Leitfähigkeit sein. So kann beispielsweise der Verbundwerkstoff als thermischer Isolator genutzt werden, der gleichzeitig jedoch in der Lage ist, eine elektrisch statische Aufladung dadurch zu verhindern, dass der Verbundwerkstoff elektrisch leitfähig ist. Dazu können beispielweise elektrisch leitende Additive dem Kunststoff beigemengt sein. Auch kann der Werkstoff entsprechend beschichtet sein. Verschiedene Möglichkelten zur additiven Ausrüstung sind beispielsweise aus der EP 1 716 995 B1 zu entnehmen. Hinsichtlich einer möglichen Farbgebung wird beispielhaft auf die DE 60 2005 003656 T2 verwiesen. Dort ist auch beispielhaft ausgeführt, was unter dem Begriff der Faserverbundwerkstoffe aufgefasst werden kann, ohne dass es sich um eine abschließende Aufzählung handelt. Verschiedenste Kunststoffe, die beispielweise im Komposit einsetzbar sind, gehen aus der DE 202006018816U1 hervor. Im Rahmen der Offenbarung wird auf den Inhalt dieser Druckschriften diesbezüglich jeweils verwlesen.

Neben Naturfasern bzw. Mehlen aus Naturfasern können In dem Verbundwerkstoff auch andere Materialien, insbesondere Fasermaterialien zum Einsatz gelangen. So besteht zum Beispiel die Möglichkeit, dass Carbonfasern genutzt werden. Auch die Verwendung von Glasfasern oder anderen mineralische Fasern ist möglich. Auch die Nutzung von Mehlen aus diesen Materialien ist möglich, Des Weiteren können auch unterschiedliche Faser- und/oder Mehlmaterialien wie auch Kunststoffe in unterschiedlichen Bereichen der Rohrdrehkupplung zum Einsatz kommen. Im übrigen stellt die Nutzung eines VerbundWerkstoffes so wie oben beschrieben bei einer Rohrdrehkupplung, insbesondere bei Teilen von dieser, vorzugsweise unabhängig von der Ausgestaltung einer Rohrdrehkupplung und insbesondere auch von dieser Rohrdrehkupplung einen eigenständigen Gedanken dar, der auch unabhängig von dem hier beanspruchten Gegenstand getrennt als eigenständiger Gegenstand weiterverfolgt werden kann. So kann beispielweise die Nutzung als thermischer und/oder elektrischer isolator bei einer Rohrdrehkupplung eigenständig verfolgt werden.

Darüber hinaus stellt es eine vorteilhafte Ausführungsform der Erfindung dar, wenn die Rohrkupplung eine Fluidzuführung, insbesondere eine Schmiermittelzuführung für das Lager und/oder die Dichtungen umfasst. Weiterhin ist auch eine Verwendung einer Rohrkupplung entsprechend dieser Ausgestaltung vorgesehen. In einer gemäß der Erfindung aufgebauten Rohrkupplung ist das Lager beabstandet zum geführten kalten Medium befestigt. Durch die Beabstandung der Lagerung ist es möglich, das Lager beziehungsweise die Lagerung mit einem Schmiermittel zu beaufschlagen. Die Lagerung hat einen entsprechenden Abstand zum Dichtungssystem, so dass gemäß einer Ausgestaltung die Lagerung nicht die extrem niedrige Temperatur des inneren Rings annimmt. Das Lager ist komplett von dem Dichtungssystem der Rohrkupplung getrennt. Eine Schmiermittelzuführung ermöglicht es hierbei, lange Standzeiten und somit große Wartungsintervalle In der Lagerung zu erzielen. Darüber hinaus ist es ebenfalls möglich, die durch die Ringelementte gebildete Sichtfläche mittels einer Fluidmittelzuführung abzudichten und/oder zu schmieren. Beispielsweise kann die Fluidmittelzuführung über eine Verschraubung mit dem Rohrbefestigungsbauteil erzielt werden. Gemäß einer Ausgestaltung Ist vorgesehen, dass die Lagerung getrennt von der Dichtung der Rohrdrehkupplung angeordnet und auch mit anderem Fluid beaufschlagt ist. Die Lagerung erhält ein Schmierfett, die Abdichtung des Dichtungssystems wird mit einem anderen Fluid beaufschlagt, insbesondere einem verflüssigten Gas. Da das Dichtungssystem sehr nah am Inneren durchflossenen Kanal angeordnet Ist, herrschen dort auch Temperaturen, die maßgeblich durch das durchströmende kalte Medium beeinflusst sein können. Bevorzugt werden gasgeschmierte Dichtungen eingesetzt. So können beispielsweise Gleitringdichtungen zum Einsatz gelangen, die zum Beispiel Metallbälge aufweisen. Die Metallbälge können geschweißte Lamellenbälge oder auch gerollte Metallbälge sein. Bevorzugt weist das Dichtungssystem eine Doppeldichtungsanordnung auf. Dadurch kann eine Sperrwirkung gegenüber der Atmosphäre einerseits und andererseits eine Lockagesperre andererseits als jeweilige Hauptfunktion eine der beiden Dichtungen zugeordnet werden. Es sind aber auch andere Dichtungssysteme möglich, die diese Funktionen getrennt oder kombiniert an Dichtungen aufweisen. Eine Ausgestaltung sieht vor, dass das durch die Rohrdrehkupplung hindurchströmende verflüssigte Gas verdampft und einer Gleltringdichtung ein berührungsfreies Laufen ermöglicht. Um ein Blockieren einer Gleitringdichtung zum Beispiel durch von In der Umgebungsluft sich auf dem Rohrdrehgelenk absetzendem Wasser zu vermelden, kann belspielsweise auf einer Niederdruckseite des Dichtungssystems eine Drossel vorgesehen sein. Ein Zwischenraum kann beispielsweise mit Stickstoff beaufschlagt, insbesondere gespült werden.

In einer Ausgestaltungsvariante ist zwischen der inneren und der äußeren Lageraufnahme mindestens eine Ringdichtung angeordnet. Weiterhin ist auch eine Verwendung einer Rohrkupplung entsprechend dieser Ausgestaltung vorgesehen. Zur Erzielung einer hohen Dichtheit In der Lageraufnahme können Ringdichtungen zwischen der Inneren und äußeren Lageraufnahme angeordnet sein. Insbesondere in dem Fall, in dem eine Schmiermittelzuführung beziehungsweise Schmierung der Lagerung erfolgt, kann durch eine Ringdichtung eine optimale Schmierung der Lagerung wie auch der Lageraufnahme zuelnander gewährleistet werden. So kann auch eine formschlüssige Verbindung zwischen den Lageraufnahmen in vorteilhafter Weise mit einem Schmiermittel versorgt werden.

In verfahrenstechnischer Hinsicht wird die Aufgabe der Erfindung dahingehend gelöst, dass ein Verfahren zum Transport von kalten Medien, insbesondere von verflüssigten Gasen, durch eine Rohrdrehkupplung bereit gestellt wird, bei dem eine Reduzierung eines Wärmestroms zwischen einem inneren, das zu transportierende Medium führenden Rohrkanalabschnitt und einer äußeren, eine Lagerung umfassende Lageraufnahme der Rohrdrehkupplung dadurch erzielt wird, dass der Rohrkanalabschnitt und die Lageraufnahme beabstandet zueinander angeordnet sind, wobei der Rohrkanalabschnitt und die Lageraufnahme über einen Steg verbunden sind und der Wärmestrom Im Vergleich zu einem sich vollflächig und vollumfänglichen zwischen dem Rohrkanalabschnitt und der Lageraufnahme erstreckenden Steg durch einen tatsächlichen Steg mit dagegen verringerter Querschnittsfläche geleitet wird. Bei diesem Verfahren stellt sich in einem Betrieb der Rohrdrehkupplung mit durchfließende verflüssigtem Gas in der Lagerung eine derartige Temperatur ein, dass eine Fettschmierung der Lagerung ermöglicht Ist. Durch die verringerte Querschnittsfläche ist eine Reduzierung des Wärmestroms zwischen Rohrkanalabschnitt und der Lagerung während eines Transports eines kalten Mediums erzielbar.

Eine weitere Ausführungsform der Erfindung ergibt sich dann, wenn der Wärmestrom durch mehrere sich umfänglich erstreckende Stege geleitet wird. Werden eine Vielzahl von Öffnungen In den den Rohrkanalabschnitt und die Lagerung verbindenden Steg eingebracht, so erfolgt ein Wärmefluss vornehmlich über die Stege, da die Öffnungen isolierend wirken.

Wird eine Verdrehung der Rohrdrehkupplung durch eine Fettschmierung der Lagerung gewährleistet, so ergibt sich eine weitere Ausgestaltungsvariante der Erfindung. Insbesondere durch die Minimierung des Wärmestroms in Richtung des Rohrkanalabschnitts treten in der Lagerung keine so tiefen Temperaturen auf, wie im Rohrkanalabschnitt. Es ist somit die Möglichkeit geschaffen, ein Rohrdrehgelenk bereit zu stellen, das mittels eines Fettes schmierbar ist.

Des Weiteren wird eine Rohrdrehkupplung in Form eines Drehgelenks an einem Verladearm zum Transport von kalten Medien in Form von verflüssigtem Gas vorgeschlagen. Die Rohrdrehkupplung umfasst ein erstes Rohrbefestigungsbauteil, das drehbar in Bezug auf ein zweites Rohrbefestigungsbauteil befestigt ist, wobei die Rohrbefestigungsbauteile abgedichtet zueinander angeordnet sind und die Rohrbefestigungsbauteile einen innenliegenden Rohrkanalabschnitt zum Durchfließen des kalten Mediums und eine zum innenliegenden Rohrkanalabschnitt beabstandete, außenliegende Lagerung der Rohrdrehkupplung bilden. Die Rohrdrehkupplung umfasst weiterhin ein Mittel zur Beabstandung der Lagerung von dem Rohrkanalabschnitt, welches derart ausgebildet ist, dass ein Wärmestrom zwischen dem Rohrkanalabschnitt und der Lagerung derart verringert Ist, dass sich in einem Betrieb der Rohrdrehkupplung mit durchfließendem verflüssigtem Gas in der Lagerung eine derartige Temperatur einstelit, dass eine Fettschmierung der Lagerung vorliegt.

Nachfolgend wird die Erfindung anhand von Figuren näher erläutert, aus denen weitere Ausgestaltungen der Erfindung hervorgehen. Die dort dargestellten Weiterbildungen sind jedoch nicht beschränkend, vielmehr können die dort jeweils beschriebenen Merkmale untereinander und mit den oben beschriebenen Merkmalen zu weiteren Ausgestaltungen kombiniert werden. Des Weiteren sei darauf verwiesen, dass die in den Figuren angegebenen Bezugszeichen den Schutzbereich der vorliegenden Erfindung nicht beschränken, sondern lediglich auf die In den Figuren dargestellten Ausführungsbeispiele verweisen. Es sei ebenfalls darauf hingewiesen, dass das dargestellte Ausführungsbeispiel zwar eine Rohrkopplung für einen Verladearm darstellt, die Erfindung aber nicht auf eine Verwendung der Rohrkopplung in einem Verladearm beschränkt Ist, sondern bei Jeglicher Art von drehbar verbundenen Rohren eingesetzt werden kann.

Es zeigen:
- Fig. 1:: einen Verlader In Form eines Schiffsverladers in einer Seitenansicht mit einem Standsäulenfuß;
- Fig. 2:: eine Rohrkupplung in Form eines Drehgelenks für tiefkalte Medien gemäß dem Stand der Technik;
- Fig. 3:: eine Detallansicht auf einen Schnitt entlang der Linie III-III einer Rohrkupplung in einer Ausführungsform der Erfindung;
- Fig. 4:: eine Detailansicht entlang der Linie IV-IV aus Fig. 5 im Bereich einer Verschraubung einer gemäß der Erfindung ausgeführten Rohrkupplung;
- Fig. 5:: eine Vorderansicht einer Rohrkupplung;
- Fig. 6:: Prinzipskizzen einer Ausbildung verschiedener Stege zwischen einem inneren Ring und einem äußeren Ring der Rohrkupplung.

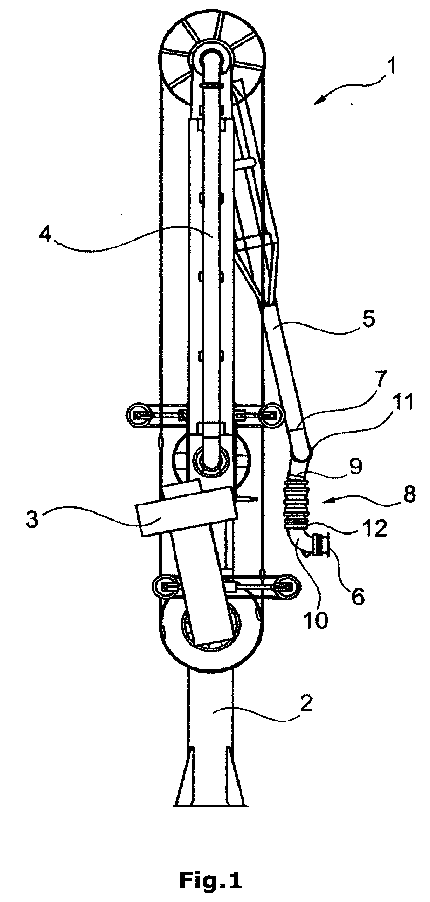

In der Fig. 1 ist eine Seitenansicht auf einen Verlader 1 beziehungsweise einen Ladearm oder Schiffsverlader in einer Seitenansicht dargestellt. Der Verlader 1 ist auf einer Standsäule 2 befestigt und mit einem Gegengewicht 3 versehen. Der Verlader weist einen aus Rohren gebildeten Innenarm 4 und einen Außenarm 5 auf. Derartige Verlader 1 sind allgemein bekannt und werden vielfach für das Umladen von flüssigen und gasförmigen Medien eingesetzt. Dabei wird ein am Ende des Verladearms 1 angeordneter Flansch 6 mit einem korrespondierenden Flansch an einer Ladeleitung eines Tankschiffs befestigt. Damit der Verlader den Schiffsbewegungen folgen kann, ist an einem Ende 7 des Außenarms 5 eine Rohrverbindung- und Schwenkanordnung 8 in Form einer Dreiergelenkgruppe befestigt. Zur Ausführung von Schwenk- beziehungsweise Drehbewegungen sind die Rohrabschnitte 9, 10 mit Rohrkupplungen in Form eines Drehgelenks 11, 12 miteinander verbunden. Lediglich zur besseren Übersichtlichkeit sind lediglich zwei Rohrabschnitte 9, 10 und zwei Rohrdrehgelenke 11, 12 mit Bezugszeichen versehen. Um den Schiffsverlader 1 für verflüssigte Gase und kalte Medien einsetzen zu können, müssen die Rohrkupplungen 11, 12 besondere Ausführungsformen aufweisen.

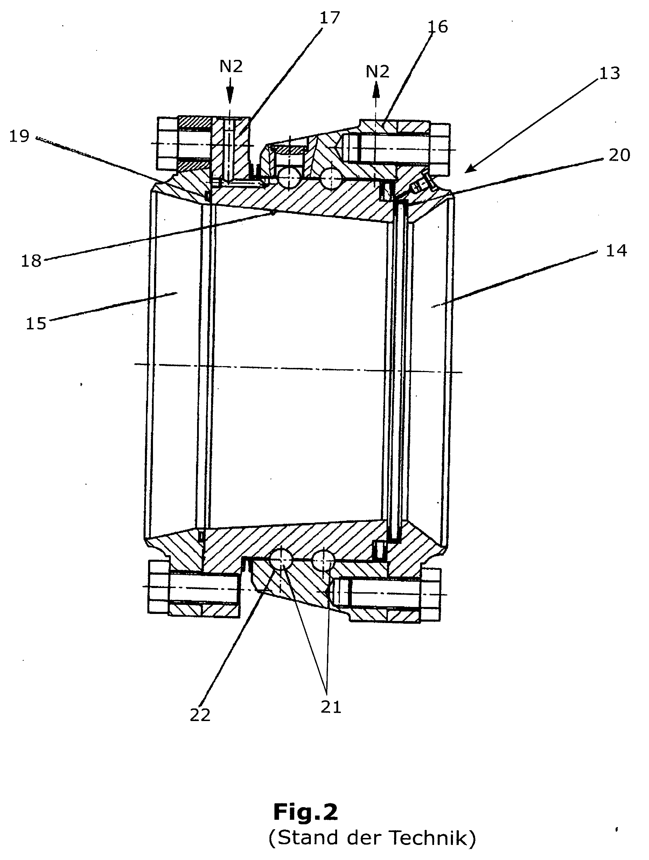

Eine Rohrkupplung in Form eines Drehgelenks 13 gemäß dem Stand der Technik ist in der Fig. 2 im Schnitt und in einer Seitenansicht wiedergegeben. Die Rohrkupplung 13 besteht aus zwei Rohrbefestigungsbauteilen 14, 15, die jeweils mit einer äußeren Lageraufnahme 16 und einer inneren Lageraufnahme 17 verschraubt sind. Eine innere ringförmige, leicht konische Oberfläche 18 der inneren Lageraufnahme bildet die innere Oberfläche 18 der Rohrkupplung 13. Dichtungen 19, 20 sind jeweils zwischen den Lageraufnahmen 16, 17 und den Rohrbefestigungsbauteilen 14, 15 angeordnet. Damit die dargestellte zweireihige Kugellagerung 21 während des Umladens des verflüssigten Gases nicht gefriert und drehbar bleibt, wird eine Lauffläche 22 der Kugellagerung 21 mit Gas gespült. Vorzugsweise wird die Lauffläche 22 mit Stickstoff in Form von N₂ gespült, da aufgrund der sehr niedrigen Temperaturen die vorhandene Luftfeuchtigkeit bereits Eis bilden könnte. Das gasförmige Stickstoff trocknet hierbei den Bereich zwischen der inneren und äußeren Lageraufnahme 16, 17 und der Lauffläche 22 und verhindert eine Eisbildung im Kugellager 21. Eine Eisbildung bildet ein enormes Sicherheitsrisiko, weil die Bewegung der Verladeeinrichtung blockiert werden könnte. Deshalb muss die Stickstoffspülung permanent während der Verladung durchgeführt werden, woraus sich ein entsprechender Stickstoffverbrauch ergibt.

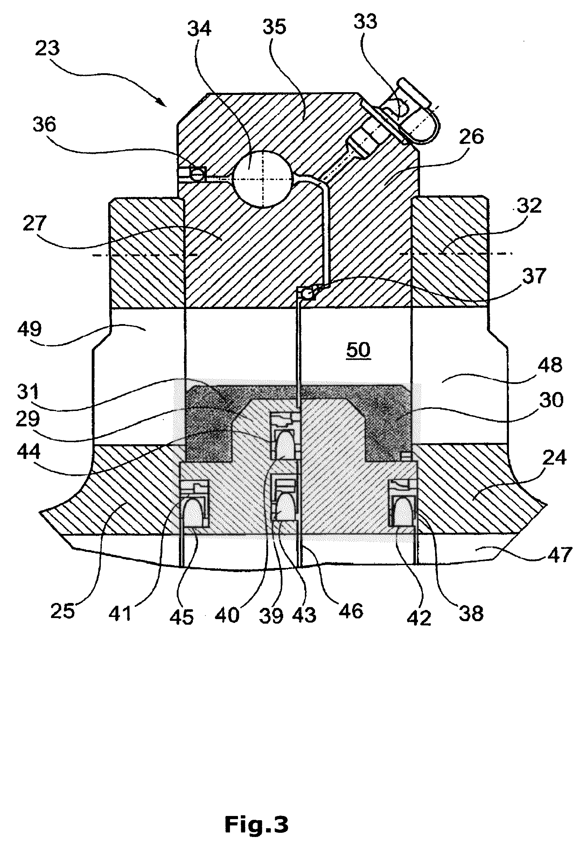

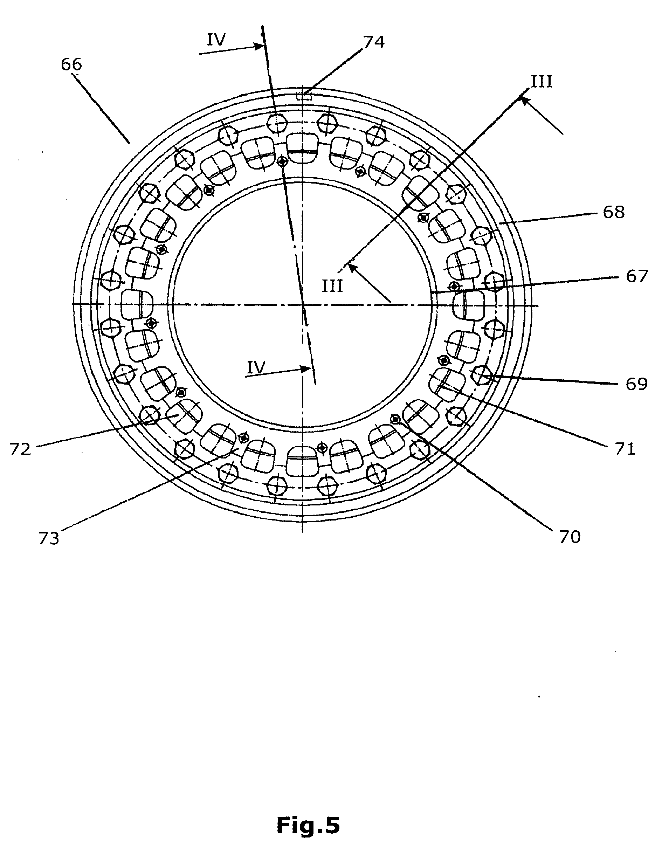

In der Fig. 3 ist ein Schnitt entlang der Linie III-111 der Fig. 5 wiedergegeben. Die Fig. 3 gibt eine Ausführungsform der Rohrkupplung im Detail und im Querschnitt wieder. Zu erkennen ist deutlich der modulare Aufbau der Rohrkupplung 23 bestehend aus den Rohrbefestigungsbauteilen 24, 25, den Lageraufnahmen 26, 27, den Ringelementen 28, 29 sowie den Ringelementaufnahmen 30, 31.

Das in der Fig. 3 auf der rechten Seite dargestellte Rohrbefestigungsbauteil 24 ist mit der äußeren Lageraufnahme 26 kraftschlüssig, vorzugsweise mittels einer Verschraubung 32, verbunden. Die äußere Lageraufnahme 26 weist einen Schmiernippel 23 auf, der das Kugellager 34 über eine Bohrung 35 mit einem Schmiermittel beaufschlagen kann. Die äußere Lageraufnahme ist über die Kugellagerung 34 formschlüssig mit der inneren Lageraufnahme 27 verbunden. Die äußere und innere Lageraufnahme 26, 27 bilden hierbei gleichzeitig die Lagerschalen für die Kugellagerung 34. Zwischen den Lageraufnahmen 26, 27 sind Ringdichtungen 36, 37 formschlüssig gehalten, so dass eine kontinuierliche Schmierung des Kugellagers 34 sowie der Verbindung der äußeren und inneren Lageraufnahme gewährleistet ist. Die innere Lageraufnahme 27 ist mit dem in der Fig. 3 dargestellten linken Rohrbefestigungsbauteil 25 verschraubt.

Zwischen den Rohrbefestigungsbauteilen 24, 25 sind Ringelement 28, 29 zur Aufnahme von umlaufenden Dichtungen 38, 39, 40, 41 angeordnet. Die umlaufenden und ringförmigen Lippendichtungen 38, 39, 40, 41 sind in Ausnehmungen 42, 43, 44, 45 in den Ringelementen 28, 29 aufgenommen. Die Ringelemente 28, 29.bilden eine Dichtfläche 46 und führen eine Relativbewegung zueinander aus. Die innere Oberfläche der Rohrkupplung bildet einen Rohrkanalabschnitt 47 und führt das kalte Medium und vorzugsweise das verflüssigte Gas (LNG). Die Lageraufnahme 26, 27 bildet die Lagerung und ist als separates Modul oder Bauteil beabstandet vom Innenrohr 47, so dass eine thermische Trennung gebildet ist. Die Rohrbefestigungsbauteile 24, 25 weisen Stege 48, 49 auf, über die eine Kraft- und Momentübertragung zwischen den Rohrbefestigungsbauteilen 24, 25 erzielbar ist. Eine durchgehende Öffnung 50 verringert den Kältefluss vom zu fordernden Medium zur Lagerung 26, 27.

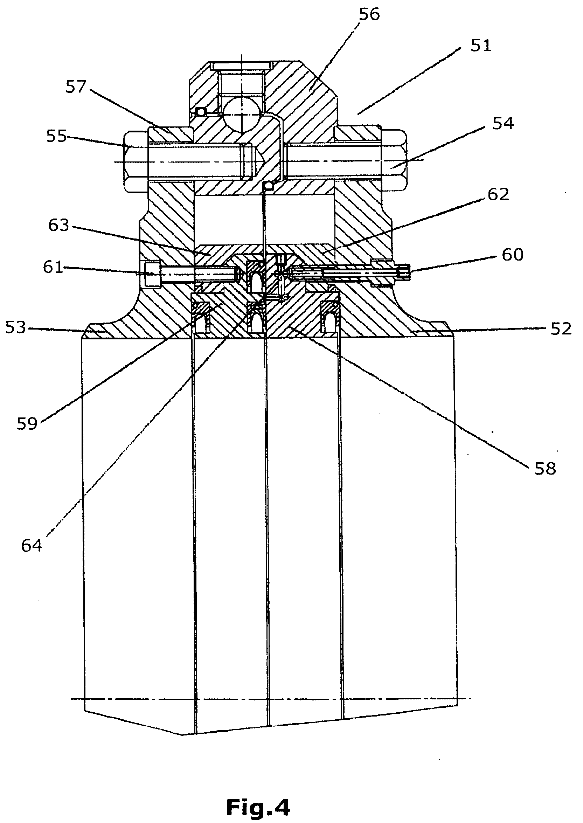

Die Fig. 4 zeigt prinzipiell einen Schnitt entlang der Linie IV-IV aus Fig. 5 als Querschnitt durch eine Rohrkupplung 51. Der Schnitt IV-IV zeigt lediglich beispielhaft die Lage des Querschnitts gemäß der Fig. 4, da in der Fig. 5 zwischen den Verschraubungen keine Öffnung vorgesehen ist. In der Fig. 4 ist wiederum der modulare Aufbau der Rohrkupplung 51 zu erkennen. Die Rohrbefestigungsbauteile 52, 53 sind mittels Verschraubungen 54, 55 mit der äußeren und inneren Lageraufnahme 56, 57 verbunden. Zwischen den Rohrbefestigungsbauteilen 52, 53 sind Ringelemente 58, 59 ebenfalls mittels Verschraubungen 60, 61 befestigt. Die Verschraubungen halten ebenfalls die Ringelementaufnahmen 62, 63. Eine Schmiermittelführung 64 ist im Bereich der Verschraubung 60 und im Ringelement 58 eingearbeitet. Eine Schmiermittelzuführung erfolgt hierbei über die Verschraubung 60. Die weiteren dargestellten Details entsprechen der Ausführung der oben beschriebenen Fig. 3.

In der Fig. 5 ist eine Vorderansicht auf eine Rohrkupplung 66 wiedergegeben. Zu erkennen ist ein Rohrbefestigungsbauteil 67 sowie eine äußere Lageraufnahme 68, die mittels Schrauben 69 kraftschlüssig verbunden sind. Über weitere Schrauben 70 sind die inneren Ringelemente beziehungsweise Ringelementaufnahmen 71 mit dem Rohrbefestigungsbauteil 67 verbunden. Deutlich zu erkennen, ist die symmetrische Anordnung der Öffnungen 72, die umfänglich in das Rohrbefestigungsbauteil 67 eingebracht sind. Zwischen den Öffnungen 76 erstrecken sich Stege 73, die eine Übertragung der Drehmomente und Kräfte zwischen den Rohrbefestigungsbauteilen 67 ermöglichen. Durch die Öffnungen 72 wird der Kältefluss vom Rohrbefestigungsbauteil 67 zur äußeren Lageraufnahme 68 reduziert. Über eine Verschraubung 74 sind die Kugeln zur Bildung eines Radialkugellagers zwischen die innere und äußere Lageraufnahme 68 einführbar.

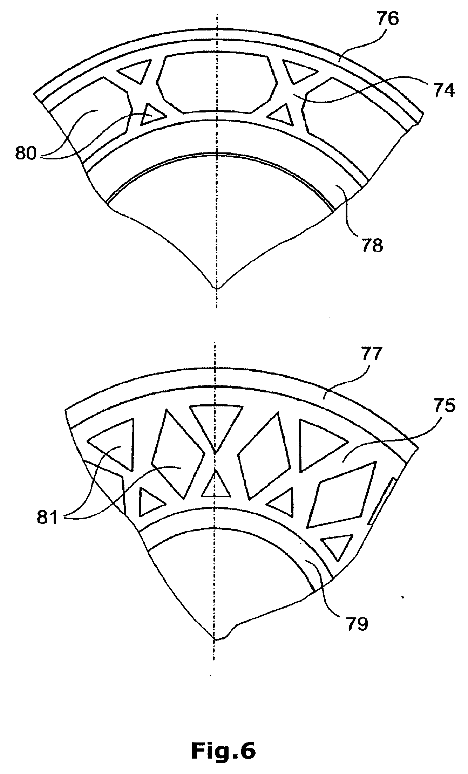

In der Fig. 6 sind beispielhaft unterschiedliche Ausbildungsformen von Verbindungsstegen 74, 75 zwischen der äußeren Lageraufnahme 76, 77 und Rohrbefestigungsbauteil 78, 79 dargestellt. Dabei wird deutlich, dass die Öffnung 80, 81 prinzipiell beliebige Formen annehmen kann, insofern eine Kraft- und Momentübertragung sowie eine thermische Trennung zwischen dem Rohrbefestigungsbauteil 78, 79 und der Lageraufnahem 76, 77 gewährleistet bleibt. Die Öffnungen 80, 81 sind dabei als Vertiefungen, Ausnehmungen oder Durchbrüche ausbildbar.

## Patentansprüche

1. Verwendung einer Rohrdrehkupplung (11, 12; 13; 23; 51; 66) in Form eines Drehgelenks an einem Verladearm (1) zum Transport von kalten Medien in Form von verflüssigtem Gas, umfassend
- ein erstes Rohrbefestigungsbauteil (24; 52), das drehbar in Bezug auf ein zweites Rohrbefestigungsbauteil (25; 53) befestigt ist,
- wobei die Rohrbefestigungsbauteile (24, 25; 52, 53) abgedichtet zueinander angeordnet sind,
- die Rohrbefestigungsbauteile (24, 25; 52, 53) einen innenliegenden Rohrkanalabschnitt (47) zum Durchfließen des kalten Mediums und eine zum innenliegenden Rohrkanalabschnitt (47) beabstandete, außenliegende Lagerung (26, 27; 56, 57) der Rohrdrehkupplung (11, 12; 13; 23; 51; 66) bilden, **dadurch gekennzeichnet, dass**
- die Rohrdrehkupplung (11, 12; 13; 23; 51: 66) ein Mittel zur Beabstandung der Lagerung (26, 27) von dem Rohrkanalabschnitt (47) umfasst, welches derart ausgebildet ist, dass ein Wärmestrom zwischen dem Rohrkanalabschnitt (47) und der Lagerung (26, 27) derart verringert ist,
- dass sich in einem Betrieb der Rohrdrehkupplung (11, 12; 13; 23; 51; 66) mit durchfließendem verflüssigtem Gas in der Lagerung (26, 27) eine derartige Temperatur einstellt, dass eine Fettschmierung der Lagerung (26, 27) ermöglicht ist.

2. Verwendung der Rohrdrehkupplung (11, 12; 13; 23; 51; 66) nach Anspruch 1,
**dadurch gekennzeichnet, dass** das Mittel zur Beabstandung einen Steg (48, 49) zwischen dem Rohrkanalabschnitt (47) und der Lagerung (26, 27) umfasst und dass in dem Steg (48, 49) mindestens eine sich radial und umfänglich erstreckende Öffnung (50; 72; 80; 81) vorhanden ist.

3. Verwendung der Rohrdrehkupplung (11, 12; 13; 23; 51; 66) nach Anspruch 2,
**dadurch gekennzeichnet, dass** im Steg (48, 49) mehrere, bevorzugt symmetrisch am Umfang verteilte Öffnungen (50; 72; 80; 81) vorhanden sind.

4. Verwendung der Rohrdrehkupplung (11, 12; 13; 23; 51; 66) nach Anspruch 1 oder 2, **dadurch gekennzeichnet, dass** das Rohrbefestigungsbauteil (24, 25; 52, 53) den Steg (48, 49) umfasst.

5. Verwendung der Rohrdrehkupplung (11, 12; 13; 23; 51; 66) nach einem der vorstehenden Ansprüche, **dadurch gekennzeichnet, dass** die Lagerung (26, 27; 56, 57) eine äußere Lageraufnahme (37; 56; 68; 76, 77) und eine innere Lageraufnahme (27, 57) umfasst, wobei die innere und die äußere Lageraufnahme (27, 37, 56, 57; 68; 76, 77) mit je einem Rohrbefestigungsbauteil (24, 25; 52, 53) verbunden ist.

6. Verwendung der Rohrdrehkupplung (11, 12; 13; 23; 51; 66) nach einem der vorstehenden Ansprüche, **dadurch gekennzeichnet, dass** die Lagerung (26, 27) in den Lageraufnahmen (27; 37; 56; 57; 68; 76, 77) geführte Kugeln (34) umfasst und in den Lageraufnahmen (27; 37; 56; 57; 68, 76, 77) zumindest eine Kugellaufbahn ausgebildet ist.

7. Verwendung der Rohrdrehkupplung (11, 12; 13; 23; 51; 66) nach einem der vorstehenden Ansprüche, **dadurch gekennzeichnet, dass** die Lagerung (26, 27; 56) ein einreihiges Kugellager (34) ist.

8. Verwendung der Rohrdrehkupplung (11, 12; 13; 23; 51; 66) nach einem der vorstehenden Ansprüche, **dadurch gekennzeichnet, dass** an dem ersten und dem zweiten Rohrbefestigungsbauteil (24, 25; 52, 53) jeweils ein separates Ringelement (28, 29, 58, 59) befestigt ist, wobei die Ringelemente (28, 29; 58, 59) gegeneinander anliegen und eine Dichtfläche (46) der Rohrdrehkupplung (11, 12; 13; 23; 51; 66) bilden.

9. Verwendung der Rohrdrehkupplung (11, 12; 13; 23; 51; 66) nach Anspruch 8, **dadurch gekennzeichnet, dass** zwischen den Ringelementen (28, 29; 58, 59) und/oder den Rohrbefestigungsbauteilen (24, 25; 52, 53) und den Ringelementen (28, 29; 58, 59) zumindest eine umlaufende Dichtung (38, 39, 40, 41) angeordnet ist.

10. Verwendung der Rohrdrehkupplung (11, 12; 13; 23; 51; 66) nach Anspruch 8 oder 9, **dadurch gekennzeichnet, dass** zwischen den Ringelementen (28, 29; 58, 59) zwei radial versetzte umlaufende Dichtungen (38, 39, 40, 41) angeordnet sind.

11. Verwendung der Rohrdrehkupplung (11, 12; 13; 23; 51; 66) nach einem der vorstehenden Ansprüche, **dadurch gekennzeichnet, dass** zwischen einer ringförmigen, radial äußeren Oberfläche der Ringelemente (28, 29; 58, 59) und den Lageraufnahmen (27; 37; 56, 57; 68; 76, 77) Ringelementeaufnahmen angeordnet sind.

12. Verwendung der Rohrdrehkupplung (11, 12; 13; 23; 51; 66) nach einem der vorstehenden Ansprüche, **dadurch gekennzeichnet, dass** die Ringelemente (28, 29; 58, 59) und die Ringelementeaufnahmen aus unterschiedlichen Werkstoffen mit unterschiedlichen spezifischen Werkstoffeigenschaften, insbesondere unterschiedlichen Wärmeleitfähigkeitskoeffizienten, gebildet sind.

13. Verwendung der Rohrdrehkupplung (11, 12; 13; 23; 51; 66) nach einem der vorstehenden Ansprüche, **dadurch gekennzeichnet, dass** die Rohrdrehkupplung (11, 12; 13; 23; 51; 66) eine Schmiermittelzuführung für das Lager und/oder die Dichtungen (38, 39, 40, 41) umfasst.

14. Verwendung der Rohrdrehkupplung (11, 12; 13; 23; 51; 66) nach einem der vorstehenden Ansprüche, **dadurch gekennzeichnet, dass** zwischen der inneren und der äußeren Lageraufnahme (27; 37; 56, 57; 68; 76, 77) mindestens eine Ringdichtung (36, 37) angeordnet ist.

15. Verfahren zum Transport von kalten Medien in Form von verflüssigten Gasen durch eine Rohrdrehkupplung (11, 12; 13; 23; 51; 66), die an einem Verladearm angeschlossen ist,
- bei dem eine Reduzierung eines Wärmestroms zwischen einem inneren, das zu transportierende verflüssigte Gas führenden Rohrkanalabschnitt (47) und einer äußeren Lagerung (26, 27; 56) der Rohrdrehkupplung (11, 12; 13; 23; 51; 66) dadurch erzielt wird, dass
- der Rohrkanalabschnitt und die Lagerung (26, 27; 56, 57) beabstandet zueinander angeordnet sind, **dadurch gekennzeichnet, dass**
- der Rohrkanalabschnitt (47) und die Lagerung (26, 27; 56, 57) über einen Steg (48, 49) verbunden sind,
- der Wärmestrom im Vergleich zu einem sich vollflächig und vollumfänglichen zwischen dem Rohrkanalabschnitt (47) und der Lagerung (26, 27; 56) erstreckenden Steg durch einen tatsächlichen Steg (48, 49) mit dagegen verringerter Querschnittsfläche geleitet wird und
- sich in einem Betrieb der Rohrdrehkupplung (11, 12; 13; 23; 51; 66) mit durchfließendem verflüssigtem Gas in der Lagerung (26, 27; 56) eine derartige Temperatur einstellt, dass eine Fettschmierung der Lagerung (26, 27; 56) ermöglicht ist.

16. Verfahren nach Anspruch 15, **dadurch gekennzeichnet, dass** der Wärmestrom durch mehrere sich umfänglich und symmetrisch erstreckende Stege (48, 49) geleitet wird.

17. Verfahren nach einem der Ansprüche 15 und 16, bei dem eine Verdrehung der Rohrdrehkupplung (11, 12; 13; 23; 51; 66) durch eine Fettschmierung der Lagerung (26, 27; 56) gewährleistet wird.

## Claims

1. Use of a rotary pipe coupling (11,12;13;23;51;66) in the form of a swivel joint on a loading arm (1) for transport of cold media in the form of liquefied gas, comprising
- a first pipe fastening component (24; 52) fastened to be rotated relative to a second pipe fastening component (25;53),
- said pipe fastening components (24,25;52,53) being arranged in a mutually sealed state,
- the pipe fastening components (24,25;52,53) forming an interior pipe channel section (47) for passage of a cold media flow therethrough, and an outer bearing (26,27;56,57) of the rotary pipe coupling (11,12;13;23;51;66) spaced from said interior pipe channel section (47), **characterized in that**
- the rotary pipe coupling (11,12;13;23;51;66) comprises a means for spacing the bearing (26,27) from the pipe channel section (47), said means being designed in such a manner that a heat flow between the pipe channel section (47) and the bearing (26,27) is reduced in such a manner that, in operation of the rotary pipe coupling (11,12;13;23;51;66) with liquefied gas passing therethrough, a temperature is generated in the bearing (26,27) which is adapted to allow for grease lubrication of the bearing (26,27).

2. Use of the rotary pipe coupling (11,12;13;23;51;66) according to claim 1, **characterized in that** said means for spacing comprises a web (48,49) between the pipe channel section (47) and the bearing (26,27) and that said web (48,49) is provided with at least one opening (50; 72;80;81) extending radially and peripherally.

3. Use of the rotary pipe coupling (11,12;13;23;51;66) according to claim 2, **characterized in that**, in said web (48,49), a plurality of openings (50;72;80;81) are provided, preferably distributed symmetrically on the periphery.

4. Use of the rotary pipe coupling (11,12;13;23;51;66) according to claim 1 or 2, **characterized in that** the pipe fastening component (24, 25;52,53) grips around said web (48,49).

5. Use of the rotary pipe coupling (11,12;13;23;51;66) according to any one of the preceding claims, **characterized in that** the bearing (26,27; 56,57) comprises an outer bearing seat (37;56;68;76,77) and an inner bearing seat (27,57), said inner and outer bearing seats (27,37,56,57; 68;76,77) being connected to respectively one pipe fastening component (24,25;52,53).

6. Use of the rotary pipe coupling (11,12;13;23;51;66) according to any one of the preceding claims, **characterized in that** the bearing (26,27) comprises balls (34) guided in the bearing seats (27;37;56;57;68;76, 77) and, in the bearing seats (27;37;56;57;68,76,77), at least one ball track is provided.

7. Use of the rotary pipe coupling (11,12;13;23;51;66) according to any one of the preceding claims, **characterized in that** the bearing (26,27; 56) is a single-row ball bearing (34).

8. Use of the rotary pipe coupling (11,12;13;23;51;66) according to any one of the preceding claims, **characterized in that**, on the first and second pipe fastening components (24,25;52,53), a respective separate ring element (28,29,58,59) is fastened, said ring elements (28, 29,58, 59) being in mutual abutment and forming a sealing surface (46) of the rotary pipe coupling (11,12;13;23;51;66).

9. Use of the rotary pipe coupling (11,12;13;23;51;66) according to claim 8, **characterized in that**, between the ring elements (28,29;58, 59) and/or the pipe fastening components (24,25;52,53), at least one circumferential sealing (38,39,40,41) is arranged.

10. Use of the rotary pipe coupling (11,12;13;23;51;66) according to claim 8 or 9, **characterized in that**, between the ring elements (28,29; 58,59), two radially offset circumferential sealings (38,39,40,41) are arranged.

11. Use of the rotary pipe coupling (11,12;13;23;51;66) according to any one of the preceding claims, **characterized in that**, between an annular, radially outer surface of the ring elements (28,29;58,59) and the bearing seats (27;37;56;57;68;76,77), ring element seats are arranged.

12. Use of the rotary pipe coupling (11,12;13;23;51;66) according to any one of the preceding claims, **characterized in that** the ring elements (28,29;58,59) and the ring element seats are formed of different materials having different specific material properties, particularly different thermal conductivity coefficients.

13. Use of the rotary pipe coupling (11,12;13;23;51;66) according to any one of the preceding claims, **characterized in that** the rotary pipe coupling (11,12;13;23;51;66) comprises a lubricant supply for the bearing and/or the sealings (38,39,40,41).

14. Use of the rotary pipe coupling (11,12;13;23;51;66) according to any one of the preceding claims, **characterized in that**, between the inner and outer bearing seats (27;37;56,57;68;76,77), at least one annular sealing (36,37) is arranged.

15. Method for transport of cold media in the form of liquefied gases through a rotary pipe coupling (11,12;13;23;51;66) connected to a loading arm,
- wherein a reduction of a heat flow between an inner pipe channel section (47) conducting the to-be-transported liquefied gas and an outer bearing (26,27;56) of the rotary pipe coupling (11,12;13;23; 51;66) is effected in that
- the pipe channel section and the bearing (26,27;56,57) are arranged at a mutual distance, **characterized in that**
- the pipe channel section (47) and the bearing (26,27;56,57) are connected via a web (48,49),
- the heat flow, in comparison to a web extending between the pipe channel section (47) and the bearing (26,27;56) in a full-surfaced and fully peripheral configuration, is conducted via an actual web (48,49) having a relatively reduced cross-sectional area, and,
- in operation of the rotary pipe coupling (11,12;13;23;51;66) with liquefied gas passing therethrough, a temperature is generated in the bearing (26,27;56) which is adapted to allow for grease lubrication of the bearing (26,27;56).

16. Method according to claim 15, **characterized in that** the heat flow is conducted through a plurality of circumferentially and symmetrically extending webs (48,49).

17. Method according to claim 15 and 16, wherein rotation of the rotary pipe coupling (11,12;13;23;51;66) is guaranteed by grease lubrication of the bearing (26,27;56).

## Revendications

1. Utilisation d'un accouplement tubulaire tournant (11, 12; 13; 23; 51; 66) sous forme d'articulation tournante sur un bras de chargement (1) pour le transport de fluides froids sous forme de gaz liquifié, comprenant
- un premier élément de fixation de tube (24 ; 52) qui est monté tournant par rapport à un deuxième élément de fixation de tube (25 ; 53),
- les éléments de fixation de tube (24, 25 ; 52, 53) étant disposés de manière étanche les uns par rapport aux autres,
- les éléments de fixation de tube (24, 25 ; 52, 53) formant un tronçon de canal tubulaire (47) pour le passage du fluide froid et un palier (26, 27 ; 56, 57) de l'accouplement tubulaire tournant (11, 12; 13; 23; 51; 66), disposé à l'extérieur et espacé du tronçon de canal tubulaire (47) disposé à l'intérieur,
**caractérisée en ce que**
- l'accouplement tubulaire tournant (11, 12; 13; 23; 51; 66) comprend un moyen pour espacer le palier (26, 27) du tronçon de canal tubulaire (47), qui est conformé de façon qu'un flux calorifique entre le tronçon de canal tubulaire (47) et le palier (26, 27) soit réduit au point que,
- lors d'un fonctionnement de l'accouplement tubulaire tournant (11, 12; 13; 23; 51; 66) avec du gaz liquifié passant par celui-ci, une température telle s'établisse dans le palier (26, 27) qu'une lubrification du palier (26, 27) avec de la graisse soit rendu possible.

2. Utilisation de l'accouplement tubulaire tournant (11, 12; 13; 23; 51; 66) selon la revendication 1, **caractérisée en ce que** le moyen pour espacer comprend une traverse (48, 49) entre le tronçon de canal tubulaire (47) et le palier (26, 27) et **en ce qu'**au moins une ouverture (50 ; 72 ; 80 ; 81) s'étendant radialement et de façon circonférentielle est présente dans la traverse (48, 49).

3. Utilisation de l'accouplement tubulaire tournant (11, 12; 13; 23; 51; 66) selon la revendication 2, **caractérisée en ce que** plusieurs ouvertures (50 ; 72 ; 80 ; 81), réparties de préférence de manière symétrique sur le pourtour, sont présentes dans la traverse (48, 49).

4. Utilisation de l'accouplement tubulaire tournant (11, 12; 13; 23; 51; 66) selon la revendication 1 ou 2, **caractérisée en ce que** l'élément de fixation de tube (24, 25 ; 52, 53) comprend la traverse (48, 49).

5. Utilisation de l'accouplement tubulaire tournant (11, 12; 13; 23; 51; 66) selon l'une des revendications précédentes, **caractérisée en ce que** le palier (26, 27 ; 56, 57) comprend une réception extérieure de palier (37 ; 56 ; 68 ; 76, 77) et une réception intérieure de palier (27, 57), les réceptions intérieure et extérieure de palier (27, 37, 56, 57 ; 68 ; 76, 77) étant attachées chacune à un élément de fixation de tube (24, 25 ; 52 , 53).

6. Utilisation de l'accouplement tubulaire tournant (11, 12; 13; 23; 51; 66) selon l'une des revendications précédentes, **caractérisée en ce que** le palier (26, 27) comprend des billes (34) guidées dans les réceptions de palier (27 ; 37 ; 56 ; 57 ; 68 ; 76, 77) et **en ce qu'**au moins une piste pour billes est formée dans les réceptions de palier (27 ; 37 ; 56 ; 57 ; 68 ; 76, 77).

7. Utilisation de l'accouplement tubulaire tournant (11, 12; 13; 23; 51; 66) selon l'une des revendications précédentes, **caractérisée en ce que** le palier (26, 27 ; 56) est un roulement à billes à un rang (34).

8. Utilisation de l'accouplement tubulaire tournant (11, 12; 13; 23; 51; 66) selon l'une des revendications précédentes, **caractérisée en ce qu'**un élément annulaire individuel (28, 29, 58, 59) respectif est fixé au premier et au second élément de fixation de tube (24, 25 ; 52, 53), les éléments annulaires (28, 29 ; 58, 59) étant adjacents l'un à l'autre et formant une surface d'étanchéité (46) de l'accouplement tubulaire tournant (11, 12; 13; 23; 51; 66).

9. Utilisation de l'accouplement tubulaire tournant (11, 12; 13; 23; 51; 66) selon la revendication 8, **caractérisée en ce qu'**au moins un joint d'étanchéité (38, 39, 40, 41) circonférentiel est disposé entre les éléments annulaires (28, 29 ; 58 ; 59) et/ou les éléments de fixation de tube (24, 25 ; 52, 53) et les éléments annulaires (28, 29 ; 58, 59).

10. Utilisation de l'accouplement tubulaire tournant (11, 12; 13; 23; 51; 66) selon la revendication 8 ou 9, **caractérisée en ce que** deux joints d'étanchéité (38, 39, 40, 41) circonférentiels sont disposés entre les éléments annulaires (28, 29 ; 58 ; 59).

11. Utilisation de l'accouplement tubulaire tournant (11, 12; 13; 23; 51; 66) selon l'une des revendications précédentes, **caractérisée en ce que** des réceptions pour éléments annulaires sont disposés entre une surface annulaire radialement extérieure des éléments annulaires (28, 29 ; 58, 59) et les réceptions de palier (27 ; 37 ; 56, 57 ; 68 ; 76, 77).

12. Utilisation de l'accouplement tubulaire tournant (11, 12; 13; 23; 51; 66) selon l'une des revendications précédentes, **caractérisée en ce que** les éléments annulaires (28, 29 ; 58, 59) et les réceptions pour éléments annulaires sont réalisés en des matériaux différents ayant des caractéristiques spécifiques différentes, notamment des coefficients de conductivité thermique différents.

13. Utilisation de l'accouplement tubulaire tournant (11, 12; 13; 23; 51; 66) selon l'une des revendications précédentes, **caractérisée en ce que** l'accouplement tubulaire tournant (11, 12; 13; 23; 51; 66) comprend un accès pour lubrifiant pour le palier et/ou les joints (38, 39, 40, 41).

14. Utilisation de l'accouplement tubulaire tournant (11, 12; 13; 23; 51; 66) selon l'une des revendications précédentes, **caractérisée en ce qu'**au moins un joint annulaire (36, 37) est disposé entre les réceptions intérieure et extérieure de palier (27 ; 37 ; 56, 57 ; 68 ; 76, 77).

15. Procédé de transport de fluides froids sous forme de gaz liquifiés à travers un accouplement tubulaire tournant (11, 12; 13; 23; 51; 66) qui est accouplé à un bras de chargement,
- selon lequel une réduction d'un flux calorifique entre un tronçon de canal tubulaire (47) intérieur dans lequel passe le gaz liquifié à transporter, et un palier extérieur (26, 27 ; 56) est obtenue par le fait que
- le tronçon de canal tubulaire et le palier (26, 27 ; 56, 57) sont disposés l'un par rapport à l'autre de manière espacée, **caractérisé en ce que**
- le tronçon de canal tubulaire (47) et le palier (26, 27 ; 56, 57) sont reliés l'un à l'autre par une traverse (48, 49),
- que le flux thermique est conduit par une traverse réelle (48, 49) ayant, par rapport à une traverse s'étendant à pleine surface et à plein pourtour entre le tronçon de canal tubulaire (47) et le palier (26, 27 ; 56), une surface de section transversale réduite et
- que, lors d'un fonctionnement de l'accouplement tubulaire tournant (11, 12; 13; 23; 51; 66) avec du gaz liquifié passant par celui-ci, une température telle s'établisse dans le palier (26, 27 ; 56) qu'une lubrification du palier (26, 27 ; 56) avec de la graisse soit possible.

16. Procédé selon la revendication 15, **caractérisé en ce que** le flux thermique est passé par plusieurs traverses (48, 49) s'étendant de manière circonférentielle et symétrique.

17. Procédé selon l'une des revendications 15 et 16, selon lequel une rotation de l'accouplement tubulaire tournant (11, 12; 13; 23; 51; 66) est assurée par une lubrification du palier (26, 27 ; 56) avec de la graisse.
